(19) Europäisches Patentamt
European Patent Office
Office européen des brevets

(11) EP 4 201 966 A1

(12) DEMANDE DE BREVET EUROPEEN

(43) Date de publication:
**28.06.2023 Bulletin 2023/26**

(21) Numéro de dépôt: **22215816.4**

(22) Date de dépôt: **22.12.2022**

(51) Classification Internationale des Brevets (IPC):
***C08B 37/02*** *(2006.01)* ***C08J 3/075*** *(2006.01)*
***C08L 5/02*** *(2006.01)*

(52) Classification Coopérative des Brevets (CPC):
**C08B 37/0021; C08J 3/075; C08L 5/02;**
C08J 2305/02

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **24.12.2021 FR 2114492**

(71) Demandeurs:
- **Commissariat à l'énergie atomique et aux énergies alternatives**
**75015 Paris (FR)**
- **Centre National de la Recherche Scientifique**
**75016 Paris (FR)**
- **Université Grenoble Alpes**
**38401 Saint-Martin-d'Hères (FR)**

(72) Inventeurs:
- **TEXIER-NOGUES, Isabelle**
**38054 GRENOBLE CEDEX 9 (FR)**
- **DARMAU, Bastien**
**38100 GRENOBLE (FR)**
- **GROSS, Andrew**
**38610 GIERES (FR)**

(74) Mandataire: **Brevalex**
**56, Boulevard de l'Embouchure**
**B.P. 27519**
**31075 Toulouse Cedex 2 (FR)**

# (54) PROCÉDÉ DE FONCTIONNALISATION DU DEXTRAN PAR DES (MÉTH)ACRYLATES ET UTILISATION DU DEXTRAN AINSI FONCTIONNALISÉ POUR PRÉPARER UN HYDROGEL

(57) La présente invention concerne un procédé pour fonctionnaliser du dextran avec des groupes (méth)acrylate, dans lequel on fait réagir le dextran avec de l'anhydride (méth)acrylique, en milieu aqueux, à un pH compris entre 9 et 11 et en présence d'une base, le nombre d'équivalents en moles d'anhydride (méth)acrylique étant inférieur à 0,5 par rapport au nombre de moles de groupes hydroxyle du dextran. La présente invention concerne également un procédé de préparation d'un hydrogel humide ou sec utilisant un tel dextran fonctionnalisé par des groupes (méth)acrylate.

EP 4 201 966 A1

## Description

### Domaine technique

La présente invention appartient au domaine technique général des biopolymères et, notamment, de leur procédé de préparation.

La présente invention concerne un procédé permettant d'obtenir, de façon efficace et rapide, la (méth)acrylation du dextran en milieu aqueux, avec une faible quantité d'agent (méth)acrylant et dans des conditions de température et d'atmosphère peu contraignantes. Ce procédé peut être mis en oeuvre avec des réactifs peu ou pas nocifs permettant d'utiliser le dextran (méth)acrylé ainsi obtenu pour préparer des hydrogels utiles dans les applications biomédicales.

Aussi, la présente invention concerne également un procédé de préparation d'un hydrogel à partir d'un dextran (méth)acrylé directement obtenu par un tel procédé de (méth)acrylation.

### Etat de la technique antérieure

Les biopolymères ont suscité une attention croissante ces dernières décennies en tant qu'alternative à l'utilisation de polymères synthétiques. Les biopolymères sont composés d'unités monomères attachées de manière covalente. Les unités monomères ou les biopolymères eux-mêmes sont synthétisés par des organismes vivants tels que des plantes, des algues, des animaux ou des bactéries, qui sont des ressources renouvelables. Les biopolymères sont généralement biocompatibles et biodégradables, ce qui a ouvert un large éventail d'applications pour ces matériaux dans les domaines alimentaire, cosmétique ou médical.

Le dextran est un exopolysaccharide produit par différents microorganismes et notamment des bactéries ou par voie enzymatique, essentiellement composé de résidus de D-glucopyranose liés en $\alpha$-1,6 avec des chaînes latérales liées en $\alpha$-1,2, $\alpha$-1,3 ou $\alpha$-1,4. En tant que tel, il est soluble dans l'eau et peut être utilisé pour différentes applications médicales comme agent antithrombotique, agent de remplissage dans l'hypovolémie ou agent réduisant la viscosité du sang. Il peut être ajouté dans différents produits pharmacologiques (stabilisation des protéines dans les vaccins ou les formulations ophtalmiques, ingrédient de viscosité et de consistance dans les formulations orales, ...).

Le dextran peut également être modifié chimiquement pour introduire des groupes chimiques susceptibles de réticuler physiquement ou chimiquement le polymère afin d'obtenir une matrice d'hydrogel correspondant à un réseau tridimensionnel, hydrophile et insoluble dans l'eau, constitué de polymères réticulés. Un dextran chimiquement modifié est caractérisé par son degré de substitution (DS), défini comme le nombre de groupes fonctionnels pour 100 unités glucopyranose du dextran. Les hydrogels gonflent au contact de l'eau grâce à la présence de liaisons hydrogène, permettant d'absorber et de retenir une grande quantité d'eau.

Les hydrogels à base de polysaccharides, tels que les hydrogels de dextran, présentent généralement une biocompatibilité et une biodégradabilité, avec des propriétés caractéristiques hautement ajustables telles que le gonflement à l'eau ou la résistance mécanique. Ces paramètres peuvent être accordés en fonction de la nature des liaisons inter-chaînes polymères (liaisons physiques, chimiques, clivables en milieu biologique ou non), de la densité de réticulation, de la masse molaire des chaînes polymères et de leur degré de ramification. Les hydrogels peuvent également être obtenus sous une forme séchée par différents procédés tels que le séchage ou la lyophilisation, ce qui les rend plus faciles à manipuler pour certaines applications.

En raison de sa facilité d'utilisation et de sa polyvalence, la photoréticulation chimique est l'une des méthodes classiques utilisées pour réticuler les chaînes de polymères et former les hydrogels. La réticulation chimique est dans ce cas obtenue lorsque le mélange de polymères préparé dans l'eau, la plupart du temps additionné d'un photo-initiateur hydrosoluble, est exposé à la lumière UV, en général à 365 nm ou 405 nm. Le mélange de polymères comprend généralement un ou plusieurs biopolymères photosensibles. Les biopolymères photosensibles sont généralement obtenus par modification chimique du polymère pour introduire des groupes chimiques photosensibles, tels que des groupes fonctionnels non saturés (acrylate, méthacrylate, alcène, alcyne,...). Les acrylates et les méthacrylates sont des groupes photopolymérisables bien connus pour fonctionnaliser les polysaccharides car ils présentent une grande réactivité et une grande efficacité pour polymériser en présence d'un photo-initiateur. Les polysaccharides acrylés ou méthacrylés sont donc largement employés pour former des hydrogels via des réactions de photoréticulation dans des applications biomédicales.

On connaît, dans l'art antérieur, différents procédés pour préparer du dextran acrylé ou méthacrylé.

En effet, la synthèse du dextran acrylé ou méthacrylé (Dex-MA) pour concevoir des hydrogels électrophorétiques à base de dextran a été décrite pour la première fois dans le brevet US 4,094,832 **[1].** La synthèse du Dex-MA a été réalisée dans l'eau, en utilisant du chlorure de méthacryloyle (2,5 eq), de la pyridine et de l'hydroxyquinone. Cependant, la réaction a montré une faible efficacité, avec l'obtention d'un faible DS. Aucune méthode de purification n'a été décrite et le polymère a été employé tel quel en combinaison avec l'acrylamide pour obtenir des hydrogels mixtes pour l'électrophorèse.

L'acrylation du dextran a ensuite été rapportée par Edman *et al* en 1980 **[2].** Dans le procédé décrit, l'acrylate de dextran a été préparé en faisant réagir le dextran avec l'acrylate de glycidyle (0,2 eq) dans un tampon carbonate à pH 11 pendant 5 jours. Cependant, un DS de seulement 5% a été atteint, ce qui correspond à moins de 10% de l'acrylate de glycidyle initialement introduit et démontre une réaction inefficace. De plus, 5 jours ont été nécessaires pour réaliser la réaction, démontrant à nouveau son inefficacité.

Une synthèse très efficace a été décrite par van Dijk-Wolthuis *et al* en 1995 **[3]** et en 1997 **[4].** Dans cette dernière, le dextran a été méthacrylé avec du méthacrylate de glycidyle en présence de 4-diméthylaminopyridine (DMAP) comme catalyseur organique dans du diméthylsulfoxyde (DMSO), sous azote et à température ambiante. Plus de 90% du méthacrylate de glycidyle engagé ont été introduits sur la chaîne de dextran, avec un bon contrôle du DS. Le principal inconvénient de cette voie de synthèse provient de la présence d'un agent méthacrylant toxique et cancérigène, d'un solvant toxique, d'un catalyseur toxique (nécessaire à la réaction), du temps de réaction long (48 h) et de l'utilisation d'argon comme atmosphère inerte pendant la réaction. En effet, van Dijk-Wolthuis *et al* ont montré que la réaction entre le dextran et le méthacrylate de glycidyle nécessite la présence de DMAP comme catalyseur organique pour la diriger vers la formation de Dex-MA **[3, 4].**

Plusieurs années plus tard i.e. en 2000, Kim *et al* ont décrit la méthacrylation du dextran en utilisant l'anhydride méthacrylique en présence de triéthylamine comme catalyseur dans un mélange de chlorure de lithium et de diméthylformamide (LiCl/DMF) sous azote **[5].** Bien que des DS plus élevés aient été obtenus en augmentant la température, la concentration de l'agent de méthacrylation et le catalyseur, un contrôle plus faible de la réaction a été observé par rapport aux procédés précédents. Ainsi, un contrôle plus faible de la réaction, des équivalents plus élevés d'agent de méthacrylation, un temps de réaction plus long (10-30h) et la nécessité d'azote, sont les principaux inconvénients du procédé décrit dans **[5].** En outre, des traces d'impuretés sont visibles sur le spectre RMN $^1$H, ce qui montre une méthode de purification inefficace.

Le Tableau 1 résume les procédés connus dans l'état de l'art antérieur sur la (méth)acrylation du dextran.

<u>Tableau 1</u>

| **Réactifs / Solvant** | **Temps de réaction / T°** | **DS (%)** | **Rendement (%)** | **Ref.** |
|---|---|---|---|---|
| Dextran Chlorure de méthacryloyle (2,5 eq) Pyridine Hydroxyquinone Eau distillée | 1h + 4h / 20°C | 2,8 | Pureté : / | **[1]** |
| Dextran Acrylate de glycidyle (0,2 eq) Tampon carbonate pH 11 | 5 jours | 5 | Pureté : / | **[2]** |
| Dextran Méthacrylate de glycidyle (0,017 - 0,17 eq) DMAP DMSO Argon | 48h / Température ambiante | 4,5-45 | 70-90 Dialyse | **[3, 4]** |
| Dextran Anhydride méthacrylique (0,5 - 2 eq) Triethylamine DMF-LiCl Argon | 10-30h / 40-80°C | 9-75 | 49-58 | **[5]** |

En résumé, les procédés de (méth)acrylation du dextran actuellement mis en oeuvre se caractérisent par (i) l'utilisation de réactifs toxiques et/ou la présence de catalyseurs et de solvants toxiques; (ii) une longue durée de réaction (entre 10 - 48h) ; (iii) l'utilisation contraignante d'une atmosphère d'argon ou d'azote et (iv) des purifications parfois insuffisantes.

En ce qui concerne l'utilisation de réactifs toxiques, il convient de noter que le (méth)acrylate de glycidyle est un bon agent de (méth)acrylation grâce à la présence d'une fonction époxy très réactive. Il a été utilisé pour (méth)acryler différents polysaccharides. Cependant, la toxicité et le caractère cancérigène du (méth)acrylate de glycidyle le rendent moins attrayant comme agent de (méth)acrylation des polysaccharides par rapport à l'anhydride (méth)acrylique, surtout si l'on considère les applications biomédicales.

A cet effet, la méthacrylation d'autres polysaccharides que le dextran a été rapportée en utilisant l'anhydride méthacrylique en présence de NaOH (pour atteindre un pH de 8) dans de l'eau distillée, avec l'acide hyaluronique **[6, 7],** l'alginate de sodium **[7],** la carboxyméthylcellulose de sodium **[8],** le sulfate de chondroïtine **[9],** la cellulose **[10, 11],** la méthylcellulose **[11]** et le chitosan **[12].**

Les procédés décrits emploient un grand excès d'anhydride méthacrylique (0,79 à 20 équivalents) et une durée de réaction comprise entre 12h et 24h, voire 48h pour modifier efficacement les biopolymères cités ci-dessus.

A noter cependant que Kelly *et al,* 2021 proposent un procédé pour fonctionnaliser des nanofibrilles de cellulose avec des polymères comprenant une étape préalable durant laquelle des groupements réactifs du type méthacrylate sont greffés sur les nanofibrilles de cellulose **[11].** Ce greffage est réalisé, en 2 h et à température ambiante, en utilisant

0,17 à 1,55 équivalent d'anhydride méthacrylique dans de l'eau distillée et en présence de KOH moyennant quoi le pH du mélange réactionnel est compris entre 9,5 et 10,5. Le DS mesuré par réflectance totale atténuée (ou ATR en anglais) est au maximum de 7%.

Les inventeurs se sont fixé pour but de proposer un procédé pour fonctionnaliser du dextran avec des groupes acrylate ou méthacrylate répondant aux problèmes techniques des procédés de l'art antérieur i.e. un procédé facile à mettre en oeuvre, rapide, efficace en terme de DS et de rendement et ne nécessitant pas de conditions contraignantes. Les inventeurs se sont également fixé pour but de proposer un procédé qui puisse être mis en oeuvre avec des réactifs et des solvants peu nocifs de façon à ce que le dextran (méth)acrylé ainsi préparé puisse être utilisé pour préparer des hydrogels pour des applications biomédicales et que le procédé de préparation est un impact moindre sur l'environnement.

## Présentation de l'invention

La présente invention permet d'atteindre le but que se sont fixé les inventeurs.

En effet, de façon surprenante, les inventeurs ont montré qu'il est possible d'obtenir, rapidement, un dextran fonctionnalisé avec des groupes (méth)acrylate dans un solvant aqueux en utilisant une faible quantité d'anhydride (méth)acrylique comme agent de (méth)acrylation en présence d'une base et ce, sans aucun réactif toxique et sans aucun catalyseur.

Dans ces conditions, la réaction a montré une efficacité élevée permettant d'obtenir un dérivé de dextran à groupes (méth)acrylate avec un degré de substitution (DS), défini comme le nombre de groupes fonctionnels (méth)acrylate ou (méth)acryloyle pour 100 résidus glucopyranose du dextran, élevé et un rendement élevé après purification complète.

En effet, les polysaccharides modifiés i.e. les dérivés de dextran à groupes (méth)acrylate ont été caractérisés par Résonance Magnétique Nucléaire du proton (RMN $^1$H) et par spectroscopie infrarouge à transformée de Fourier (spectroscopie IRTF) et les résultats obtenus ont montré que les dérivés de dextran à groupes (méth)acrylate sont très purs (moins de 0,01% de signal d'un autre produit organique sur les spectres RMN $^1$H) avec différents DS.

Il n'était pas du tout évident à la date de dépôt de l'invention que de tels résultats puissent être obtenus, dans un temps court, en mettant en oeuvre de l'anhydride (méth)acrylique dont le nombre d'équivalents en moles est inférieur à 0,5 par rapport au nombre de moles de groupes hydroxyle dans le dextran et dans un milieu aqueux sans composé toxique comme de la 4-diméthylaminopyridine (DMAP), du diméthylsulfoxyde (DMSO) ou un mélange de chlorure de lithium et de diméthylformamide (LiCl/DMF). En effet, les procédés décrits dans l'art antérieur pour (méth)acryler le dextran ou tout autre polysaccharide utilisent, pour la plupart, des quantités d'agent (méth)acrylant et des durées de réaction bien plus importantes et/ou des conditions opératoires contraignantes et/ou nocives.

En d'autres termes, des DS et des rendements étonnamment élevés ont été obtenus avec le procédé selon l'invention, en utilisant une très faible quantité d'anhydride (méth)acrylique, en présence d'une base et en milieu aqueux, et sans catalyseur. En comparaison, la (méth)acrylation typique du dextran est réalisée dans un solvant organique, en utilisant un catalyseur et ce, en grande quantité, et un nombre élevé d'équivalents d'anhydride méthacrylique **[5].** La méthacrylation typique d'autres polysaccharides réalisée dans l'eau nécessite un grand excès d'anhydride méthacrylique pour modifier efficacement le polysaccharide correspondant (environ 2 - 20 eq) et le temps de réaction est généralement de l'ordre de 10 - 48h.

Par ailleurs, même si Kelly *et al,* 2021 **[11]** proposent un procédé pour fonctionnaliser des nanofibrilles de cellulose avec des groupements réactifs du type méthacrylate, en 2 h et à température ambiante, en utilisant une faible quantité d'anhydride méthacrylique dans de l'eau distillée et en présence de KOH, la faible valeur obtenue pour le DS maximum pour les nanofibrilles de cellulose modifiés aurait dissuadé l'homme du métier de mettre en oeuvre un tel procédé pour modifier du dextran.

Sans vouloir être tenu par une quelconque théorie, cet effet inattendu (haute efficacité dans l'eau avec un faible nombre d'équivalents d'anhydride (méth)acrylique) pourrait être dû à la plus grande solubilité du dextran dans l'eau que dans les solvants organiques, impliquant une meilleure réactivité des groupes hydroxyle, ce qui entraîne une plus faible quantité d'anhydride (méth)acrylique nécessaire pour modifier le dextran pour obtenir un DS de 13 - 62%. De plus, en présence d'une plus grande quantité de réactif de (méth)acrylation, des polymères hautement substitués sont rapidement obtenus, ce qui rend le polymère insoluble et le précipite dans l'eau, empêchant la réaction de se terminer correctement.

Par conséquent, la présente invention concerne donc un procédé pour fonctionnaliser du dextran avec des groupes (méth)acrylate, dans lequel l'on fait réagir le dextran avec de l'anhydride (méth)acrylique, en milieu aqueux, à pH compris entre 9 et 11 et en présence d'une base, le nombre d'équivalents en moles d'anhydride (méth)acrylique étant inférieur à 0,5 par rapport au nombre de moles de groupes hydroxyle du dextran.

Par « fonctionnaliser du dextran avec des groupes (méth)acrylate », on entend, dans le cadre de la présente invention, la modification du dextran pour y introduire des groupes (méth)acrylate. Cette modification consiste à remplacer au moins une partie des groupes hydroxyle libres du dextran présents avant le procédé de l'invention par des groupes

(méth)acrylate. Cette modification peut également être considérée comme le remplacement des atomes d'hydrogène d'au moins une partie des groupes hydroxyle libres du dextran présents avant le procédé de l'invention par des groupes (méth)acryloyle.

Ainsi, le dérivé de dextran obtenu à l'issue du procédé selon l'invention est un dextran (méth)acrylé i.e. un dextran chimiquement modifié dont tout ou partie des groupes hydroxyle libres ont été estérifiés pour former des groupes esters (méth)acrylate. En d'autres termes, le procédé selon l'invention est un procédé d'estérification d'au moins une partie des groupes hydroxyle libres du dextran.

D'un point de vue réactionnel, le procédé selon l'invention consiste en une attaque nucléophile des groupes hydroxyle du dextran sur l'un des groupes carbonyle de l'anhydride (méth)acrylique, qui fragmente l'agent de (méth)acrylation, entraînant, d'une part, l'estérification du polysaccharide et, d'autre part, la formation d'acide (méth)acrylique comme sous-produit. L'acide (méth)acrylique est neutralisé en utilisant une base afin de diriger la réaction vers l'estérification.

L'expression « groupe (méth)acrylate » est la formule classiquement utilisée pour décrire les deux alternatives « groupe acrylate » ou « groupe méthacrylate ». Ceci s'applique également aux expressions et termes suivants : « (méth)acrylé », « (méth)acrylation », « anhydride (méth)acrylique » et « groupe (méth)acryloyle ».

Dans un mode de réalisation particulier, le procédé selon l'invention est un procédé pour fonctionnaliser du dextran avec des groupes méthacrylate.

Le dextran mis en oeuvre dans le cadre de la présente invention est essentiellement composé de résidus de D-glucopyranose liés en $\alpha$-1,6 avec des chaînes latérales liées en $\alpha$-1,2, $\alpha$-1,3 ou $\alpha$-1,4 et avantageusement en $\alpha$-1,3 ou $\alpha$-1,4.

Le dextran mis en oeuvre peut être un dextran obtenu naturellement ou par synthèse.

Le dextran mis en oeuvre dans le cadre de la présente invention peut également être un dextran modifié i.e. un dextran dont certains des groupes hydroxyle ont été substitués préalablement à la mise en oeuvre du procédé selon l'invention. A titre d'exemples particuliers d'un tel dextran modifié, on peut citer un sulfate dextran, un carboxyméthyl-dextran ou un dextran diéthylaminoéthyle (ou DEAE-dextran).

Typiquement, le dextran mis en oeuvre présente une masse molaire, faible ou moyenne, allant de $1.10^3$ g/mol à $7.10^4$ g/mol. En variante, il peut présenter une masse molaire élevée i.e. supérieure à $7.10^4$ g/mol, supérieure ou égale à $1.10^5$ g/mol, notamment supérieure ou égale à $1.10^6$ g/mol, en particulier, supérieure ou égale à $1.10^7$ g/mol et, plus particulièrement supérieure ou égale à $1.10^9$ g/mol.

Comme précédemment expliqué, le procédé selon l'invention met en oeuvre une faible quantité de l'anhydride (méth)acrylique comme agent (méth)acrylant. Les formules semi-développées de l'anhydride acrylique et de l'anhydride méthacrylique sont respectivement :

$$H_2C=C(H)-C(=O)-O-C(=O)-C(H)=CH_2$$

et

$$H_2C=C(CH_3)-C(=O)-O-C(=O)-C(CH_3)=CH_2.$$

La quantité d'anhydride (méth)acrylique dans le procédé selon l'invention s'exprime en nombre d'équivalents en moles d'anhydride (méth)acrylique par rapport au nombre de moles de groupes hydroxyle dans le dextran. Elle se calcule comme étant le ratio entre le nombre de moles d'anhydride (méth)acrylique et le nombre de moles de groupes hydroxyle du dextran.

Typiquement, le nombre d'équivalents en moles d'anhydride (méth)acrylique mis en oeuvre dans le procédé selon l'invention est inférieur à 0,5 par rapport au nombre de moles de groupes hydroxyle du dextran. Notamment le nombre d'équivalents en moles d'anhydride (méth)acrylique mis en oeuvre est compris entre 0,01 et 0,48, en particulier entre 0,02 et 0,45, et, plus particulièrement, entre 0,05 et 0,40 par rapport au nombre de moles des groupes hydroxyle du dextran.

Toute base est utilisable dans le cadre de la présente invention. Ainsi, ce dernier peut être choisi parmi les bases organiques et les bases inorganiques.

Avantageusement, la base mise en oeuvre dans le cadre de la présente invention est choisie dans le groupe constitué par l'hydroxyde de sodium (NaOH), l'hydroxyde de potassium (KOH), l'hydroxyde de calcium ($Ca(OH)_2$), l'hydroxyde d'ammonium ($NH_4OH$), l'hydrogénocarbonate de sodium ($NaHCO_3$), l'hydrogénocarbonate de potassium ($KHCO_3$), l'hydrogénocarbonate de calcium ($Ca(HCO_3)_2$), le carbonate de sodium ($Na_2CO_3$), le carbonate de potassium ($K_2CO_3$), le carbonate de calcium (CaCOs), l'hydroxyde de lithium (LiOH), l'hydroxyde de tétraméthylammonium (TMAH), l'hydroxyde de tétraéthylammonium (TEAH), l'hydroxyde de tétrapropylammonium (TPAH), l'hydroxyde de tétrabutylammonium (TBAH), la méthylamine, l'éthylamine, l'isopropylamine, la monoisopropylamine, la diéthylamine, la diisopropylamine, la dibutylamine, la triméthylamine, la triéthylamine, la triisopropylamine, la tributylamine, la choline, la

monoéthanolamine, la diéthanolamine, le 2-aminoéthanol, le 2-(éthylamino)éthanol, le 2-(méthylamino)éthanol, la N-méthyldiéthanolamine, le diméthylaminoéthanol, le diéthylaminoéthanol, le nitrilotriéthanol, le 2-(2-aminoéthoxy)éthanol, le 1-amino-2-propanol, la triéthanolamine, la monopropanolamine, la dibutanolamine, la pyridine et un de leurs mélanges.

Dans un mode de réalisation particulier, la base mise en oeuvre est choisie parmi les bases inorganiques et ce, notamment lorsque le dextran modifié préparé par le procédé selon l'invention est utilisé pour préparer des hydrogels pour applications biomédicales. Ainsi, la base mise en oeuvre est choisi dans le groupe constitué par l'hydroxyde de sodium (NaOH), l'hydroxyde de potassium (KOH), l'hydroxyde de calcium ($Ca(OH)_2$), l'hydroxyde d'ammonium ($NH_4OH$), l'hydrogénocarbonate de sodium ($NaHCO_3$), l'hydrogénocarbonate de potassium ($KHCO_3$), l'hydrogénocarbonate de calcium ($Ca(HCO_3)_2$), le carbonate de sodium ($Na_2CO_3$), le carbonate de potassium ($K_2CO_3$), le carbonate de calcium (CaCOs), l'hydroxyde de lithium (LiOH) et un de leurs mélanges.

Dans un mode de réalisation plus particulier encore, la base mise en oeuvre est l'hydroxyde de sodium (NaOH).

L'homme du métier saura déterminer, sans effort inventif, la quantité de base à utiliser de façon à ce que la réaction entre le dextran et l'anhydride (méth)acrylique se fasse à un pH compris entre 9 et 11. En d'autres termes, la quantité de base à apporter sera choisie de façon à ce que la solution réactionnelle présente un pH compris entre 9 et 11 durant tout le procédé.

Le procédé selon l'invention est réalisé en milieu aqueux. Ainsi, le solvant de la solution réactionnelle comprenant le dextran, l'anhydride (méth)acrylique et la base, est de l'eau. Par « eau », on entend, dans le cadre de la présente invention, l'eau de distribution, l'eau désionisée, l'eau distillée ou encore l'eau ultra-pure (18,2 MΩ). Avantageusement, le solvant de la solution réactionnelle mise en oeuvre dans le procédé selon l'invention est de l'eau distillée.

Dans le procédé selon l'invention, la réaction entre le dextran et l'anhydride (méth)acrylique est effectuée pendant une durée inférieure à 3 h, notamment inférieure à 2 h. Avantageusement, la durée de la réaction entre le dextran et l'anhydride (méth)acrylique est comprise entre 15 min et 90 min, notamment entre 20 min et 75 min et, en particulier, entre 30 min et 60 min.

Contrairement à certains des procédés décrivant, dans l'art antérieur, la modification du dextran par des groupes (méth)acrylate, il n'existe aucune contrainte particulière quant à la température et à l'atmosphère sous lesquelles le procédé selon l'invention doit être réalisé.

Typiquement, le procédé selon l'invention est réalisé à une température inférieure à 35°C, notamment à une température comprise entre 15°C et 30°C et, en particulier, à température ambiante (i.e. 23°C $\pm$ 5°C).

De même, il est possible de réaliser le procédé selon l'invention sous atmosphère inerte comme sous hélium, argon, azote ou un de leurs mélanges. Avantageusement, le procédé selon l'invention est réalisé sous l'air.

Avantageusement, le procédé selon l'invention comprend les étapes consistant à :

a) préparer une solution aqueuse de dextran ;
b) ajouter, à la solution aqueuse de dextran préparée lors de l'étape a), de l'anhydride (méth)acrylique en une quantité telle que le nombre d'équivalents en moles d'anhydride (méth)acrylique soit inférieur à 0,5 par rapport au nombre de moles de groupes hydroxyle du dextran, moyennant quoi une solution aqueuse contenant du dextran et de l'anhydride (méth)acrylique est obtenue ;
c) maintenir le pH de la solution aqueuse contenant du dextran et de l'anhydride (méth)acrylique obtenue à l'étape b), à une valeur comprise entre 9 et 11, par ajout d'une base, pendant une durée suffisante pour obtenir du dextran fonctionnalisé par des groupes (méth)acrylate ; puis
d) récupérer le dextran fonctionnalisé par des groupes (méth)acrylate obtenu lors de l'étape c).

Avantageusement, l'étape a) consiste à dissoudre, dans de l'eau, du dextran se présentant sous forme solide. Cette dissolution est réalisée sous agitation en utilisant un malaxeur, un agitateur, un barreau magnétique, un bain à ultrasons ou un homogénéisateur.

Dans un mode de réalisation particulier, l'anhydride (méth)acrylique est ajouté, lors de l'étape b), à la solution aqueuse contenant du dextran lentement et, en particulier, goutte à goutte. Une fois l'ajout terminé, la solution aqueuse contenant du dextran et de l'anhydride (méth)acrylique est obtenue typiquement sous agitation en utilisant un malaxeur, un agitateur, un barreau magnétique, un bain à ultrasons ou un homogénéisateur.

La base est ajoutée, lors de l'étape c), à la solution aqueuse contenant du dextran et de l'anhydride (méth)acrylique, tout au long de la réaction afin de maintenir le pH de cette dernière à une valeur comprise entre 9 et 11. Cet ajout peut se faire goutte à goutte. En même temps que ces ajouts successifs, la solution aqueuse contenant du dextran, de l'anhydride (méth)acrylique et la base est maintenue typiquement sous agitation en utilisant un malaxeur, un agitateur, un barreau magnétique, un bain à ultrasons ou un homogénéisateur.

En d'autres termes, la solution réactive est maintenue, sous agitation, et à pH compris entre 9 et 11 par des ajouts successifs de base, pendant une durée de réaction telle que précédemment définie moyennant quoi le dextran et l'anhydride (méth)acrylique réagissent ensemble et du dextran fonctionnalisé par des groupes (méth)acrylate est obtenu (étape d)).

Le dextran fonctionnalisé par des groupes (méth)acrylate obtenu à l'issue de l'étape d) est séparé, des autres éléments contenus dans la solution et notamment de l'anhydride (méth)acrylique, de l'acide (méth)acrylique et de la base par toute technique de séparation de deux liquides par membrane connue de l'homme du métier comme une filtration, une précipitation sélective ou une dialyse. En d'autres termes, la technique de récupération utilisée lors de l'étape d) est une filtration, une précipitation sélective ou une dialyse.

Comme précédemment expliqué, le dextran fonctionnalisé par des groupes (méth)acrylate obtenu à l'issue du procédé selon l'invention est un dérivé photoréticulable particulièrement intéressant pour préparer des hydrogels tels que des hydrogels pour des applications biomédicales notamment du fait de sa pureté à l'issue de l'étape d).

Le dextran fonctionnalisé par des groupes (méth)acrylate obtenu à l'issue du procédé selon l'invention peut être utilisé pour concevoir une matrice d'hydrogel par photoréticulation des fonctions (méth)acrylate et ainsi construire un réseau 3D de chaînes polymères réticulées. La photoréticulation est généralement obtenue par la polymérisation radicalaire du polymère modifié en présence d'un initiateur photosensible ou photo-initiateur qui initie la réaction en utilisant la lumière ultraviolette-visible (UV-vis) à une longueur d'onde spécifique. La photoréticulation UV-vis est une réaction rapide qui peut être réalisée dans l'eau dans des conditions douces et attractives ou après séchage, avec un bon contrôle du processus et des propriétés du matériau obtenu.

Par conséquent, la présente invention concerne également un procédé de préparation d'un hydrogel comprenant les étapes consistant à :

i) préparer un dextran fonctionnalisé par des groupes (méth)acrylate selon le procédé tel que précédemment défini ;
ii) préparer une solution aqueuse contenant le dextran fonctionnalisé par des groupes (méth)acrylate préparé à l'étape i) et un photo-initiateur ;
iii) appliquer la solution préparée à l'étape ii) sur un support ;
iv) éventuellement sécher la solution appliquée à l'étape iii), moyennant quoi un produit contenant du dextran fonctionnalisé par des groupes (méth)acrylate et un photo-initiateur est obtenu ; et
v) soumettre la solution appliquée à l'étape iii) ou le produit obtenu à l'étape iv) à une irradiation, moyennant quoi un hydrogel humide ou un hydrogel sec est obtenu.

Le dextran fonctionnalisé par des groupes (méth)acrylate préparé selon le procédé tel que précédemment défini peut être utilisé lors de l'étape ii) immédiatement après sa préparation et notamment après l'étape de purification telle que précédemment définie. En variante, après purification, le dextran fonctionnalisé par des groupes (méth)acrylate peut être lyophilisé et conservé à -20°C avant son utilisation ultérieure i.e. avant la mise en oeuvre de l'étape ii).

La solution de l'étape ii) peut être préparée (i') en dissolvant, dans de l'eau ou une solution aqueuse, du dextran fonctionnalisé par des groupes (méth)acrylate et un photo-initiateur se présentant sous forme solide, (ii') en mélangeant ensemble du dextran fonctionnalisé par des groupes (méth)acrylate se présentant sous forme de solution aqueuse et au moins un photo-initiateur se présentant sous forme de solution aqueuse, (iii') en dissolvant du dextran fonctionnalisé par des groupes (méth)acrylate se présentant sous forme solide dans une solution aqueuse d'un photo-initiateur ou encore (iv') en dissolvant un photo-initiateur se présentant sous forme solide dans une solution aqueuse de dextran fonctionnalisé par des groupes (méth)acrylate.

Par « solution aqueuse », on entend une solution dont le solvant comprend de l'eau ou est constitué d'eau telle que précédemment définie. Typiquement, cette solution aqueuse est une solution aqueuse tamponnée telle que du tampon PB (tampon phosphate), du tampon PBS (tampon phosphate salin), du tampon Tris ou du tampon HEPES.

Tout photo-initiateur connu de l'homme du métier est utilisable dans le cadre de la présente invention. Un tel photo-initiateur est excité par le rayonnement déclenché par irradiation lors de l'étape v) (le plus souvent par UV, visible ou UV-visible, mais aussi par radiations γ ou par faisceaux d'électrons) permettant la production de radicaux par des mécanismes plus ou moins complexes. A titre d'exemples de photo-initiateurs utilisables dans le cadre de la présente invention, on peut citer le rose bengale, la rhodamine B, l'éosine Y, la roboflavine, le 2-hydroxy-1-[4-(2-hydroxyéthoxy),phényl]-2-méthyl-1-propanone (également connu sous la dénomination « Irgacure 2595 »), le monoacylphosphine oxyde (MAPO) et les dérivés hydrosolubles de bisacylphosphine oxyde (BAPO), la 1-hydroxy-cyclohéxyl-phénylkétone (également connue sous la dénomination « Irgacure 184 »), la 2-Benzyl-2-diméthylamino-1-(4-morpholinophényl)-1-butanone (également connue sous la dénomination « Irgacure 369 »), la (2-méthyl-4'-(méthylthio)-2-morpholinopropiophénone (également connu sous la dénomination « Irgacure 907 »), le phényl-2,4,6-triméthylbenzoylphosphinate de lithium (LAP) ou le 2-hydroxy-4'-(2-hydroxyéthoxy)-2-méthylpropiophénone (également connu sous la dénomination « Irgacure 2959 »), la 2,2'-azobis[2-méthyl-N-(2-hydroxyéthyl) promionamide (également connu sous la dénomination « VA-086 ») et l'érythrosine.

Toutefois, pour des hydrogels pour applications biomédicales, les photo-initiateurs cytocompatibles et solubles dans l'eau tels que le phényl-2,4,6-triméthylbenzoylphosphinate de lithium (LAP) ou le 2-hydroxy-4'-(2-hydroxyéthoxy)-2-méthylpropiophénone (également connu sous la dénomination « Irgacure 2959 ») sont avantageusement choisis.

Il est possible que la solution préparée à l'étape ii) comprenne, en plus du dextran fonctionnalisé par des

groupes (méth)acrylate et du photo-initiateur, au moins un autre élément comme, par exemple, un principe pharmaceutiquement ou cosmétiquement actif, un traceur ou un autre polymère différent du dextran fonctionnalisé par des groupes (méth)acrylate, éventuellement réticulable.

Le support sur lequel est déposée, lors de l'étape iii), la solution aqueuse préparée lors de l'étape ii) aura une forme et une géométrie, adaptées pour conférer, à l'hydrogel obtenu après photoréticulation ou après séchage puis photoréticulation, une forme donnée et éventuellement une forme micro- ou nano-structurée. A cet effet, le support mis en oeuvre lors de l'étape iii) peut être un moule et notamment un moule en silicone ou en téflon.

Pour préparer des hydrogels secs, il est possible de soumettre la solution aqueuse contenant le dextran fonctionnalisé par des groupes (méth)acrylate et un photo-initiateur déposée sur le support, à un séchage. Il est évident que la durée du séchage dépendra de la taille et de l'épaisseur de l'hydrogel à sécher. A titre d'exemple, ce séchage est réalisé à l'air libre pendant une durée comprise entre 12 h et 48 h, notamment de 18 h et 36 h et, en particulier, de l'ordre de 24 h (i.e. 24 h $\pm$ 3 h).

Enfin, comme précédemment évoqué, la solution aqueuse appliquée sur le support ou le produit obtenu, sur le support, après séchage de la solution aqueuse sont soumis à une irradiation, le plus souvent, par UV-vis, mais aussi par radiations $\gamma$ ou par faisceaux d'électrons. La longueur d'onde pour une irradiation aux UV-vis sera choisie en fonction des caractéristiques du photo-initiateur présent dans la solution ou le produit. A titre d'exemple particulier, lorsque le photo-initiateur utilisé est du LAP, une irradiation UV-vis à 405 nm sera mise en oeuvre lors de l'étape v).

Les hydrogels obtenus à partir de dextran fonctionnalisé par des groupes (méth)acrylate peuvent être préparés et utilisés à l'état humide ou sec, comme illustré dans la partie expérimentale ci-après.

Les hydrogels humides ainsi préparés peuvent servir de systèmes d'administration de médicaments implantés, injectables ou contrôlés sur la peau. Ils peuvent également être utilisés sous la forme de micro- ou nano-gels humides.

Les hydrogels secs ainsi préparés peuvent servir de patchs pour l'absorption de fluides biologiques tels que la sueur, la salive, l'urine, le sang... Ils peuvent également servir de systèmes d'administration de médicaments implantés ou contrôlés sur la peau. Ils peuvent également être utilisés sous forme de micro- ou nano-gels.

D'autres caractéristiques et avantages de la présente invention apparaîtront encore à l'homme du métier à la lecture des exemples ci-dessous donnés à titre illustratif et non limitatif, en référence aux figures annexées.

## Brève description des figures

La Figure 1 présente les spectres RMN $^1H$ à 300 MHz, dans de l'oxyde de deutérium ($D_2O$)) a) du dextran, b) du dextran méthacrylé (0,0625 eq d'anhydride méthacrylique), c) du dextran méthacrylé (0,125 eq d'anhydride méthacrylique), d) du dextran méthacrylé (0,25 eq d'anhydride méthacrylique) et e) du dextran méthacrylé (0,3 eq d'anhydride méthacrylique).

La Figure 2 présente les spectres IRTF du dextran (Dex) et du dextran méthacrylé (Dex-MA) avec des DS allant de 13 à 62%.

La Figure 3 présente le chromatogramme d'exclusion stérique couplée à un détecteur de diffusion de la lumière multi-angle (GPC-MALS) du dextran T70 avant modification (Mn masse molaire en nombre de 63 900 $\pm$ 300 g/mol) et après modification avec un DS de 52% (Mn masse molaire en nombre de 78 300 $\pm$ 4 400 g/mol).

La Figure 4 présente l'évolution du degré de méthacrylation du dextran et du rendement de la réaction en fonction du nombre d'équivalents d'anhydride méthacrylique ajoutés au cours de la réaction.

La Figure 5 présente la cinétique de la méthacrylation du dextran dans l'eau avec différents équivalents d'anhydride méthacrylique montrant l'évolution du DS en fonction du temps.

La Figure 6 présente l'effet du pH sur le DS du Dex-MA préparés en utilisant de l'anhydride méthacrylique dans l'eau distillée.

## Description des modes de réalisation

### Exemple 1 : Procédé de méthacrylation du dextran selon l'invention.

*Produits utilisés :*

Le Dextran T70 (Dex, Mw = 70 000 g/mol, Pharmacosmos) ; anhydride méthacrylique (94%), phényl-2,4,6-triméthylbenzoylphosphinate de lithium (LAP, $\leq$ 95%), tampon phosphate salin (ou PBS pour « Phosphate-buffered saline ») (1X : 137 mM NaCl, 2,7 mM KCl, 10 mM $Na_2HPO_4$, 1,8 mM $KH_2PO_4$ ; pH = 7,4) ont été achetés chez Sigma-Aldrich.

Les membranes de dialyse (poids moléculaire de 12 000-14 000 Da) ont été achetées chez Fisher Scientific.

L'eau a été déionisée à l'aide du purificateur Purelab d'ELGA-Veolia (18,2 MOhm.cm). Le lyophilisateur a été acheté chez Labconco.

*Protocole* :

Le Dex (5 g) a été dissous dans 100 mL d'eau distillée dans un bécher. Après dissolution complète, différents nombres d'équivalents en moles d'anhydride méthacrylique (de 0,0625 à 0,5 équivalents) par rapport au nombre de moles de groupes hydroxyle du dextran ont été ajoutés goutte à goutte dans la solution de dextran afin d'obtenir le DS souhaité.

Ensuite, le pH a été ajusté en utilisant du NaOH (3 mol.L-1) pour être autour de 9-11 pendant toute la durée de la réaction (1h à température ambiante (RT), 20-25°C).

Le schéma réactionnel correspondant à ce protocole est représenté dans le schéma 1 ci-dessous :

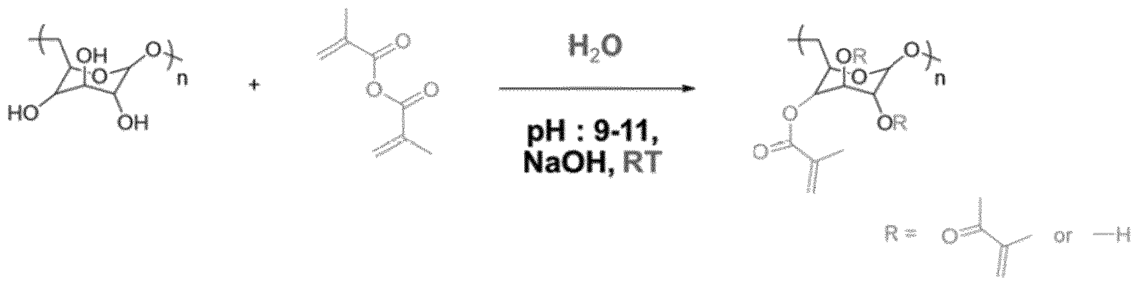


Schéma 1

Enfin, le polymère Dex-MA a été dialysé contre de l'eau distillée pendant 1 semaine (membrane de 12 000 Da-14 000 Da) avec environ 14 changements de bain pour éliminer les impuretés, et lyophilisé à -46°C, 0,140 mbar pendant 1 semaine. Le solide blanc a été caractérisé par Résonance Magnétique Nucléaire $^1H$ (RMN $^1H$), par spectroscopie infrarouge à transformée de Fourier (spectroscopie IRTF), et par chromatographie d'exclusion stérique couplée à un détecteur de diffusion de la lumière multi-angle (GPC-MALS), puis stocké à -20°C avant utilisation.

*Résultats* :

*Spectres RMN $^1H$ :*

Les spectres RMN $^1H$ (dans de l'oxyde de deutérium ($D_2O$)) du Dex et du Dex-MA, enregistrés par un spectromètre Bruker à 300 MHz (Bruker Avance-300) sont présentés Figure 1. Les protons typiques du Dex portés par les carbones C2 à C6 (notés de 2 à 6) donnent un signal de 3,5 à 4,2 ppm. Le proton H1 porté par le carbone C1 donne un signal à 5,1 ppm et 5,4 ppm, noté 1, correspondant respectivement à la liaison $\alpha$-1,6 et à la liaison $\alpha$-1,3. Une valeur usuelle de 4% de liaison $\alpha$-1,3 par rapport à la liaison $\alpha$-1,6 a été calculée, à partir des intégrales des signaux correspondants à 5,4 ppm et des signaux des autres protons du Dex.

Sur les spectres des polymères Dex-MA dialysés et lyophilisés, l'absence des signaux de l'acide méthacrylique à 5,4 et 5,7 ppm et des autres traces d'impuretés indique un polymère bien purifié (>0,01%). En plus des protons du Dex précédemment décrits, les protons du groupe méthacrylate (protons vinyles notés 9, et protons méthyles notés 10, avec un rapport entre les signaux vinyles et méthyles de 2:3) sont clairement visibles sur les spectres des différents Dex-MA, montrant la bonne incorporation des entités méthacrylate. Le degré de substitution, défini comme la quantité de groupes méthacryloyle pour 100 résidus de glucopyranose du dextran, est calculé comme suit :

$$DS = \frac{(I_9 + I_{10}) / 5}{(I_1\,(5{,}1\ ppm) + I_2 + I_3 + I_4 + I_5 + I_6) / 6{,}96}$$

avec $I_1$, $I_2$, $I_3$, $I_4$, $I_5$, $I_6$, $I_9$ et $I_{10}$ représentant respectivement l'intégrale de l'intensité des pics des protons 1, 2, 3, 4, 5, 6, 9 et 10 respectivement.

Ces polymères méthacrylés peuvent être utilisés pour préparer des hydrogels exempts de composés toxiques, ce qui les rend extrêmement intéressants pour les applications biomédicales.

*Spectres IRTF :*

La spectroscopie IRTF a été réalisée avec un spectrophotomètre Shimadzu IRAffinity-1 avec un détecteur DLATGS (Deuterated Triglycine Sulphate dopé avec de la I-Alanine). Les mesures ont toutes été effectuées sous une atmosphère sèche à température ambiante avec des échantillons lyophilisés et compressés contre un disque de KBr. Les spectres IRTF du Dex et du Dex-MA présentés Figure 2 confirment la méthacrylation du dextran. Les bandes caractéristiques du Dex sont présentes à 3100 - 3600 $cm^{-1}$ (-OH) et 2930 $cm^{-1}$ (-CH2). L'incorporation réussie du groupe méthacrylate sur le Dex a été confirmée par l'apparition de liaisons ester à 1710 $cm^{-1}$ (C=O), 1636 $cm^{-1}$ (C=C), 1299 et 1147 $cm^{-1}$ (C-O), qui augmentent avec l'augmentation du DS. Une diminution de l'intensité de la bande hydroxyle entre 3100 - 3600 $cm^{-1}$ (-OH) était également notable, indiquant une bonne estérification de ces fonctions.

*GPC-MALS :*

La GPC-MALS a été réalisée sur une chaîne HPLC Shimadzu composée d'un passeur d'échantillons SIL-20A, une pompe haute pression LC-20AD, un dégazeur DGU-20A 3R et un four à colonnes CTO-20A. L'éluant utilisé est le nitrate de sodium à 0,1 M + azoture de sodium à 0,03% à un débit de 0,5 ml/min. Le volume injecté pour chaque mesure est de 100 $\mu$L. Le temps d'élution est de 70 min. L'éluant est filtré à 0.1 $\mu$m. La phase stationnaire présente des colonnes SHODEX OHpak composées d'une colonne de garde et de 2 colonnes SB 806 M HQ : Exclusion limit (Pullulan) de 20 000 kDa. L'échantillon est mis en solution avec l'éluant utilisé sur le système. L'échantillon est filtré sur 0,2 $\mu$m. Les spectres obtenus par GPC-MALS sont présentés Figure 3 confirment également la modification chimique du Dex avec une augmentation de la masse molaire entre un Dex non modifié et un Dex-MA ayant un DS de 52%, passant d'une masse molaire moyenne en nombre de 63 900 $\pm$ 300 g/mol à 78 300 $\pm$ 4 400 g/mol. De plus, l'absence d'autres signaux indique une intégrité des chaînes polymères conservée après la réaction et une méthode de purification efficace. Une dispersité des chaînes polymères étroite est également conservée entre un Dex (Mw/Mn = 1,14) et un Dex-MA avec un DS = 52% (Mw/Mn = 1,09), ce qui semble montrer une homogénéité de la modification chimique.

*Rendements :*

Des rendements de 85 - 92% sont obtenus pour des DS de 13 - 62% lorsque 0,0625 à 0,3 équivalents d'anhydride méthacrylique sont utilisés (Tableau 2). En comparaison, un rendement de seulement 9% est obtenu pour un DS de 62 à 84% en utilisant 0,5 équivalent d'anhydride méthacrylique en raison de la précipitation de la majorité du Dex-MA lorsqu'un nombre élevé d'équivalents d'anhydride méthacrylique est utilisé (Figure 4). De plus, une évolution linéaire de la DS de 13 - 62% en fonction du nombre d'équivalents d'anhydride méthacrylique de 0,0625 à 0,3 eq est obtenue, montrant un procédé offrant un bon contrôle sur la réaction et la DS obtenue (voir Figure 3).

Tableau 2 : Résumé des différentes formulations employées avec les DS, rendement et solubilité correspondants du biopolymère modifié obtenu après purification.

| Dextran | Anhydride méthacrylique | DS (%) | Rendement (%) | Solubilité dans l'eau |
|---|---|---|---|---|
| 5g | 0,915 mL - 0,0625 eq | 13 $\pm$ 0,5 | 92 | Oui |
| 5g | 1,83 mL - 0,125 eq | 26 $\pm$ 1 | 90 | Oui |
| 5g | 3,66 mL - 0,25 eq | 52 $\pm$ 2 | 89 | Oui |
| 5g | 4,39 mL - 0,3 eq | 62 $\pm$ 1 | 85 | Oui |
| 5g | 7,32 mL - 0,5 eq | 62 - 84 | 9 | Partielle |

Le calcul du nombre d'équivalents en moles d'anhydride méthacrylique se fait, dans cet exemple, comme suit :

Densité de l'anydride méthacrylique (g/mL)

Volume de l'anhydride méthacrylique pure (mL)

Masse molaire de l'anhydride méthacrylique (g/mol)

$$\text{Nombre d'équivalents} = \frac{V\,(mL) \times 1{,}04 \,/\, 154.165}{3 \times m\,(g)\,/\,162}$$

Nombre de groupe hydroxyle par unité glucopyranose

Masse de Dextran utilisé

Masse molaire d'une unité glucopyranose du Dextran (g/mol)

Le nombre de groupes hydroxyle par unité glucopyranose est de 3.

**Exemple 2 comparatif** : **Procédé de méthacrylation du dextran dans l'eau, sans solvant, catalyseur ou réactif toxique, et avec un nombre élevé d'équivalents d'agent méthacrylant (1-20 équivalents).**

Le dextran (5 g) a été dissous dans 100 mL d'eau distillée dans un bécher. Après dissolution complète, différents nombres d'équivalents d'anhydride méthacrylique (de 1 à 20 équivalents) par rapport aux groupes hydroxyle du dextran ont été ajoutés goutte à goutte dans la solution de dextran.

Ensuite, le pH a été ajusté en utilisant NaOH (3 mol.L-1) pour être autour de 8 - 11 pendant toute la durée de la réaction (24 h à température ambiante, 20-25°C).

L'apparition d'un solide blanc est clairement visible après quelques minutes de réaction. Par conséquent, les polymères Dex-MA précipités sont lavés à l'eau, solubilisés dans l'éthanol et précipités dans l'eau plusieurs fois pour éliminer les impuretés, et séchés sous vide. Le solide blanc a été caractérisé par spectroscopie IRTF, et stocké à -20°C avant utilisation.

Après l'étape de purification, les biopolymères modifiés sont insolubles dans l'eau. Les bandes typiques de Dex-MA sont visibles par spectroscopie IRTF. Cependant, des traces d'impuretés sont notables sur les spectres IRTF. De plus, des rendements plus faibles sont obtenus en raison de la perte partielle de poudre pendant les étapes de précipitation/lavage.

**Exemple 3 : Cinétique de la méthacrylation du dextran selon le procédé de l'invention.**

Une étude cinétique de la réaction réalisée comme décrit dans l'exemple 1 a été menée en présence de plusieurs équivalents d'anhydride méthacrylique (par rapport aux groupes hydroxyles du Dex), en prenant des aliquotes à intervalles réguliers, qui ont été lyophilisés et analysés par spectroscopie RMN $^1H$ dans du $D_2O$, comme montré Figure 5.

Les DS ont été déterminés à partir des protons correspondants des groupes vinyle des polysaccharides modifiés à 9 ppm et des protons 2 - 6 du Dex à 3,5-4,2 ppm. Une cinétique élevée inattendue et une méthacrylation efficace ont été obtenues avec une durée de seulement 60 min en utilisant seulement entre 0,0625 et 0,25 équivalents d'anhydride méthacrylique pour obtenir un DS de 13% à 62%.

Ceci est surprenant en comparaison avec la méthacrylation typique du Dex qui nécessite habituellement environ 24 à 48 h dans un solvant organique. Ainsi, la réactivité des groupes hydroxyles secondaires du Dex semble être meilleure dans un solvant aqueux, ce qui peut expliquer la différence de cinétique et d'efficacité de cette réaction par rapport à l'étude précédemment publiée réalisée dans un solvant organique **[3, 4].**

**Exemple 4 : Optimisation du pH pour la méthacrylation du dextran dans l'eau.**

Il est bien connu que la méthacrylation des polysaccharides à l'aide d'anhydride méthacrylique dans l'eau entraîne la production d'acide méthacrylique. Il en résulte de nombreuses variations de pH au cours de ces synthèses.

La synthèse du Dex-MA a été étudiée en utilisant une quantité fixe de 0,125 équivalents d'anhydride méthacrylique à différents pH en utilisant de la NaOH comme base et le DS final a été déterminé par RMN $^1H$. Les résultats sont présentés Figure 6.

Le DS le plus élevé est obtenu pour un pH entre 9 et 11, qui est égal à 26%. Une compétition entre la méthacrylation et la réaction d'hydrolyse est observée par RMN $^1H$, et un rapport de 69 : 31 entre les deux réactions est obtenu. De fortes variations de pH sont observées pour cette gamme de pH, indiquant la formation d'acide méthacrylique qui est ensuite neutralisé par l'ajout de NaOH.

Aucune méthacrylation n'a lieu sans ajout de NaOH en raison de la désactivation totale des groupes hydroxyles, conduisant à un DS nul. Il est observé qu'à un pH supérieur à 12, seule l'hydrolyse de l'anhydride méthacrylique a lieu avec seulement quelques pourcentages de méthacrylate introduit sur le dextran (faible DS).

Lorsque le pH de la réaction est compris entre 6 et 8, une compétition entre la méthacrylation et la réaction d'hydrolyse est observée par RMN $^1H$, avec cette fois-ci un rapport de 50 : 50 entre les deux réactions et un DS égal à 6% est obtenu.

Ainsi, l'ajustement du pH est un paramètre clé pour cette réaction et le pH optimal de la méthacrylation du Dex a été déterminé entre 9 et 11.

**Exemple 5 : Optimisation du catalyseur basique pour la méthacrylation du dextran dans l'eau.**

Différents catalyseurs basiques ont été employés en suivant le même protocole que celui de l'exemple 1. Les différentes formulations ont été analysées par RMN $^1H$ dans du $D_2O$. Un résumé des résultats est présenté dans le Tableau 3.

Tableau 3 : Résumé des résultats de la méthacrylation du dextran par l'anhydride méthacrylique dans l'eau distillée en utilisant différents catalyseurs basiques.

| | DS (%) | Méthacrylation (%) | Hydrolyse (%) | Anhydride méthacrylique n'ayant pas réagi (%) |
|---|---|---|---|---|
| NaOH | 26 | 69 | 29 | 2 |
| KOH | 24 | 64 | 36 | 0 |
| $Na_2CO_3$ | 19 | 51 | 49 | 0 |
| $K_2CO_3$ | 20 | 53 | 46 | 1 |
| $Et_3N$ | 25 | 67 | 33 | 0 |

Bien que des résultats assez similaires soient obtenus, il est observé que le DS le plus élevé a été obtenu lorsque NaOH est employé atteignant une valeur de 26%. De plus, le rapport entre les réactions compétitives de méthacrylation et d'hydrolyse est également plus élevé en faveur de la méthacrylation lorsque NaOH est utilisé.

Ainsi, NaOH est l'un des catalyseurs les plus optimaux pour la méthacrylation du dextran dans le DW. Les autres alternatives à favoriser en vue d'une application biomédicale sont KOH, $Na_2CO_3$ ou $K_2CO_3$ contrairement à la triéthylamine ($Et_3N$) qui est une base organique corrosive.

**Exemple 6 : Méthacrylation de Dex de différentes masses molaires.**

Le Dextran T20 (Dex T20, Mw = 20 000 g/mol) et le Dextran 550 (Mw = 550 000 g/mol) ont été achetés respectivement chez Pharmacosmos et Sigma-Aldrich. La réaction de méthacrylation a été conduite comme détaillé dans l'exemple 1 avec respectivement 0,125 et 0,072 équivalents d'anhydride méthacrylique pour le Dex T20 et le Dex 550, respectivement. Le DS a été caractérisé par RMN du proton comme décrit à l'exemple 1. Les résultats obtenus sont décrits dans le Tableau 4 suivant.

Tableau 4

| Dextran | Anhydride méthacrylique | DS (%) | Rendement (%) | Solubilité dans l'eau à T° ambiante |
|---|---|---|---|---|
| T20 | 1,83 mL - 0,125 eq | 26 | 90 | Oui |
| 550 | 1,06 mL - 0,072 eq | 14 | - | Oui |

**Exemple 7 : Préparation d'hydrogels de Dex-Met photoréticulés à l'état humide.**

Du Dex-MA de différents DS (13% à 52%) préparés comme à l'exemple 1 et du LAP ont été mélangés dans un flacon de verre de 10 mL, et dissous dans du PBS (1X) pour obtenir une concentration en polymère de 10%, 20%

ou 30% p/p, et une concentration finale en LAP de 0,1% à 1% p/p. La solution a été coulée dans un moule en téflon et exposée à la lumière UV-vis (300 W) à 405 nm pendant 60 s pour obtenir un hydrogel humide. Les hydrogels obtenus ne sont pas solubles dans l'eau, ce qui démontre l'efficacité de la réticulation du polymère.

**Exemple 8 : Taux de gonflement et propriétés mécaniques d'hydrogels de Dex-Met séchés et photoréticulés.**

Du Dex-MA de différents DS (13% à 52%) et du LAP ont été mélangés dans un flacon en verre de 10 mL, et dissous dans du PBS (1X) pour obtenir une concentration en polymère de 10%, 20% ou 30% p/p, et une concentration finale en LAP de 0,1% à 1% p/p. La solution a été coulée dans un moule en téflon ou silicone et laissée sécher à l'air libre pendant 24h. Après séchage total de la solution, le mélange a été exposé à la lumière UV-vis (300 W) à 405 nm pendant 60 s pour obtenir un hydrogel séché solide.

Il est intéressant de noter qu'aucun rétrécissement du polymère n'a été observé et que le matériau séché avait la même forme que le moule en téflon ou silicone. Les hydrogels photoréticulés avec 0,1% p/p de LAP sont apparus comme des matériaux transparents alors que ceux réticulés avec 0,5% et 1% p/p de LAP sont apparus légèrement jaunes (en raison de l'action de la lumière UV-vis sur le photoréticulant LAP).

De manière intéressante, lorsqu'un matériau Dex-MA (DS = 52%) réticulé en présence de 1% p/p de LAP a été immergé dans une solution PBS, le matériau jaune est devenu transparent, ce qui indique que les fragments de LAP n'ayant pas réagi et présents à l'intérieur de l'hydrogel Dex-MA ont été éliminés pendant le lavage avec le PBS.

Les hydrogels ont été caractérisés par un test de gonflement. Les matériaux Dex-Met photoréticulés séchés ont été pesés (poids W0). Les échantillons ont été placés dans un flacon contenant du PBS (1X) à température ambiante (21-24°C). Ils ont été retirés toutes les heures et leur surface a été rapidement essuyée avec une serviette en papier pour enlever l'excès d'eau. Ensuite, les échantillons ont été immédiatement pesés (Wt), et replacés dans le PBS pour les points de mesure suivants. Cette opération a été répétée jusqu'à ce qu'aucun changement de poids ne soit plus détecté. Le taux de gonflement (TG) a été calculé selon la formule TG = (Wt - W0) / W0. Trois expériences ont été réalisées en parallèle pour chaque échantillon, et la valeur moyenne a été calculée (Tableaux 5 et 6).

Tableau 5 : Evolution du TG (%) à différents DS et différentes concentrations du Dex-Met

| Taux de gonflement (%) | DS = 52% | DS = 26% | DS = 13% |
|---|---|---|---|
| 30% p/p de Dex-MA | 48,0 ± 1,9 | 50,1 ± 2,3 | 84,4 ± 2,3 |
| 20% p/p de Dex-MA | 49,5 ± 2 | 56,8 ± 1,5 | 96,4 ± 3,7 |
| 10% p/p de Dex-MA | 52,0 ± 2,1 | 66,4 ± 3,1 | 111,8 ± 2,9 |

Tableau 6 : Evolution du TG (%) à différentes concentrations de Dex-MA dont le DS est de 13% et différentes concentrations de LAP

| Taux de gonflement (%) | 1% p/p LAP | 0,5% p/p LAP | 0,1% p/p LAP |
|---|---|---|---|
| 30% p/p de Dex-MA | 84,4 ± 2,3 | 133,6 ± 3,6 | 189,3 ± 5,4 |
| 20% p/p de Dex-MA | 96,4 ± 3,7 | 142,9 ± 3,9 | 207,8 ± 6 |
| 10% p/p de Dex-MA | 111,8 ± 2,9 | 158,0 ± 3,7 | 238,1 ± 5,6 |

Le maximum du taux de gonflement (TG) pour chaque formulation est atteint en environ 1-2 h. Le TG diminue avec l'augmentation de la teneur en polymère, passant de 52% à 10% p/p à 48% à 30% p/p en raison de la plus faible porosité du matériau à haute concentration en polymère (Tableaux 5 et 6).

Lorsque la concentration en polymère et en LAP est fixée à 10% et 1% p/p respectivement, une augmentation du TG est observée avec une diminution du DS, passant de 52% pour un DS de 52% à 111,8% pour un DS de 13%. En effet, en diminuant le DS, la densité de réticulation du matériau diminue également, impliquant un réseau avec une densité plus faible.

Le même phénomène est observé lorsque la concentration en LAP diminue. En effet, en diminuant la teneur en initiateur, on obtient des mailles plus grandes et donc un réseau avec une densité plus faible.

Des tests de compression ont également été réalisés sur les hydrogels secs en utilisant un texturomètre TAXT.Plus (Stable Micro Systems). La vitesse de compression a été fixée à 0,5 $mm.s^{-1}$ avec une force de compression maximale de 50 N. Les valeurs du module de compression E ont été calculées comme la pente de la courbe de la force appliquée en fonction du déplacement.

Des valeurs E autour du GigaPascal sont obtenues (Tableaux 7 et 8). On observe que le polymère DS et la concentration en LAP n'affectent pas significativement les propriétés mécaniques des matériaux, contrairement à la concentration en polymère.

Tableau 7 : Evolution du module de compression E en fonction du DS du Dex-MA et de la concentration en polymère.

| Echantillon | 10% p/p | 20% p/p | 30% p/p |
|---|---|---|---|
| DS (Dex-MA) 52% + 1% LAP | 32 ± 1 MPa | 165 ± 8 MPa | 322 ± 9 MPa |
| DS (Dex-MA) 26% + 1% LAP | 42 ± 2 MPa | 129 ± 7 MPa | 342 ± 10 MPa |
| DS (Dex-MA) 13% + 1% LAP | 34 ± 2 MPa | 153 ± 6 MPa | 333 ± 8 MPa |
| Dex | 38 ± 2 MPa | 158 ± 3 MPa | 338 ± 5 MPa |

Tableau 8 : Evolution du module de compression E avec un DS du Dex-MA à 13% en fonction de la concentration en polymère et en LAP.

| Echantillon | 10% p/p | 20% p/p | 30% p/p |
|---|---|---|---|
| 1% p/p LAP | 34 ± 2 MPa | 153 ± 6 MPa | 333 ± 8 MPa |
| 0,5% p/p LAP | 29 ± 2 MPa | 143 ± 9 MPa | 316 ± 6 MPa |
| 0,1% p/p LAP | 27 ± 2 MPa | 167 ± 5 MPa | 328 ± 8 MPa |

**RÉFÉRENCES BIBLIOGRAPHIQUES**

[1] Brevet US 4,094,832 publié le 13 juin 1978.

[2] Edman et al, 1980, « Immobilization of proteins in microspheres of biodegradable polyacryldextran », J. Pharm. Sci., vol. 69, pages 838-842.

[3] Van Dijk-Wolthuis et al, 1995, « Synthesis, characterization, and polymerization of glycidyl méthacrylate derivatized dextran », Macromolecules, vol. 28, pages 6317-6322.

[4] Van Dijk-Wolthuis et al, 1995, « Reaction of dextran with glycidyl methacrylate: an unexpected transesterification », Macromolecules, vol. 30, pages 3411-3413.

[5] Kim et al, 2000, « Synthesis and characterization of dextran-methacrylate hydrogels and structural study by SEM », Journal of Biomedical Materials Research, vol. 49, pages 517-527.

[6] Smeds et al, 1999, « Synthesis of a novel polysaccharide hydrogel », J. Macromol. Sci., vol. 36, pages 981-989.

[7] Kimberly et al, 2001, « Photocrosslinkable polysaccharides for in situ hydrogel formation », Journal of Biomedical Materials Research, vol. 54, pages 115-121.

[8] Qian et al, 2014, « Delivery of doxorubicin in vitro and in vivo using bio-reductive cellulose nanogels », Biomater. Sci., vol. 2, pages 220-232.

[9] Wang et al, 2001, « Synthesis and characterization of chondroitin sulfate-methacrylate hydrogels », Carbohydrate Polymers, vol. 52, pages 389-396.

[10] Chen et al, 2010, « Facile methacrylation of cellulose via alkaline aqueous estérification for thiol-ene click functionalization », Materials Letters, vol. 245, pages 18-21.

[11] Kelly et al, 2021, « Aqueous polymer modification of cellulose nanofibrils by grafting-through a reactive méthacrylate group », Macromol. Rapid Commun. Macromol. Rapid Commun, vol. 42, 2000531.

[12] Kolawole et al, 2018, « Methacrylated chitosan as a polymer with enhanced mucoadhesive properties for transmucosal drug delivery », International Journal of Pharmaceutics, vol. 550, pages 123-129.


**Revendications**

1. Procédé pour fonctionnaliser du dextran avec des groupes (méth)acrylate, caractérisé en ce l'on fait réagir le dextran avec de l'anhydride (méth)acrylique, en milieu aqueux, à pH compris entre 9 et 11 et en présence d'une base, le nombre d'équivalents en moles d'anhydride (méth)acrylique étant inférieur à 0,5 par rapport au nombre de moles de groupes hydroxyle du dextran.

**2.** Procédé de fonctionnalisation selon la revendication 1, **caractérisé en ce que** ledit nombre d'équivalents en moles d'anhydride (méth)acrylique mis en oeuvre est compris entre 0,01 et 0,48, en particulier entre 0,02 et 0,45, et, plus particulièrement, entre 0,05 et 0,40 par rapport au nombre de moles des groupes hydroxyle du dextran.

**3.** Procédé de fonctionnalisation selon la revendication 1 ou 2, **caractérisé en ce que** ladite base est choisie dans le constitué par l'hydroxyde de sodium (NaOH), l'hydroxyde de potassium (KOH), l'hydroxyde de calcium ($Ca(OH)_2$), l'hydroxyde d'ammonium ($NH_4OH$), l'hydrogénocarbonate de sodium ($NaHCO_3$), l'hydrogénocarbonate de potassium ($KHCO_3$), l'hydrogénocarbonate de calcium ($Ca(HCO_3)_2$), le carbonate de sodium ($Na_2CO_3$), le carbonate de potassium ($K_2CO_3$), le carbonate de calcium ($CaCO_3$), l'hydroxyde de lithium (LiOH) et un de leurs mélanges.

**4.** Procédé de fonctionnalisation selon l'une quelconque des revendications 1 à 3, **caractérisé en ce que** ladite base est l'hydroxyde de sodium (NaOH).

**5.** Procédé de fonctionnalisation selon l'une quelconque des revendications 1 à 4, **caractérisé en ce que** la durée de la réaction entre le dextran et l'anhydride (méth)acrylique est inférieure à 3 h, avantageusement inférieure à 2 h, notamment comprise entre 15 min et 90 min, en particulier entre 20 min et 75 min et, tout particulièrement, entre 30 min et 60 min.

**6.** Procédé de fonctionnalisation selon l'une quelconque des revendications 1 à 5, **caractérisé en ce que** ledit procédé est réalisé à une température inférieure à 35°C, notamment à une température comprise entre 15°C et 30°C et, en particulier, à température ambiante (i.e. 23°C $\pm$ 5°C).

**7.** Procédé de fonctionnalisation selon l'une quelconque des revendications 1 à 6, **caractérisé en ce que** ledit procédé est réalisé sous l'air.

**8.** Procédé de fonctionnalisation selon l'une quelconque des revendications 1 à 7, **caractérisé en ce que** ledit procédé comprend les étapes consistant à :

a) préparer une solution aqueuse de dextran ;
b) ajouter, à la solution aqueuse de dextran préparée lors de l'étape a), de l'anhydride (méth)acrylique en une quantité telle que le nombre d'équivalents en moles d'anhydride (méth)acrylique soit inférieur à 0,5 par rapport au nombre de moles de groupes hydroxyle du dextran, moyennant quoi une solution aqueuse contenant du dextran et de l'anhydride (méth)acrylique est obtenue ;
c) maintenir le pH de la solution aqueuse contenant du dextran et de l'anhydride (méth)acrylique obtenue à l'étape b), à une valeur comprise entre 9 et 11, par ajout d'une base, pendant une durée suffisante pour obtenir du dextran fonctionnalisé par des groupes (méth)acrylate ; puis
d) récupérer le dextran fonctionnalisé par des groupes (méth)acrylate obtenu lors de l'étape c).

**9.** Procédé de fonctionnalisation selon la revendication 8, **caractérisé en ce que** la technique de récupération utilisée lors de ladite étape d) est une filtration, une dialyse, ou une précipitation sélective.

**10.** Procédé de préparation d'un hydrogel comprenant les étapes consistant à :

i) préparer un dextran fonctionnalisé par des groupes (méth)acrylate selon le procédé tel que défini à l'une quelconque des revendications 1 à 9 ;
ii) préparer une solution aqueuse contenant le dextran fonctionnalisé par des groupes (méth)acrylate préparé à l'étape i) et un photo-initiateur ;
iii) appliquer la solution préparée à l'étape ii) sur un support ;
iv) éventuellement sécher la solution appliquée à l'étape iii), moyennant quoi un produit contenant du dextran fonctionnalisé par des groupes (méth)acrylate et un photo-initiateur est obtenu ;
v) soumettre la solution appliquée à l'étape iii) ou le produit obtenu à l'étape iv) à une irradiation, moyennant quoi un hydrogel humide ou un hydrogel sec est obtenu.

**11.** Procédé de préparation selon la revendication 10, **caractérisé en ce que** ledit photo-initiateur est le phényl-2,4,6-triméthylbenzoylphosphinate de lithium (LAP) ou le 2-hydroxy-4'-(2-hydroxyéthoxy)-2-méthylpropiophénone.

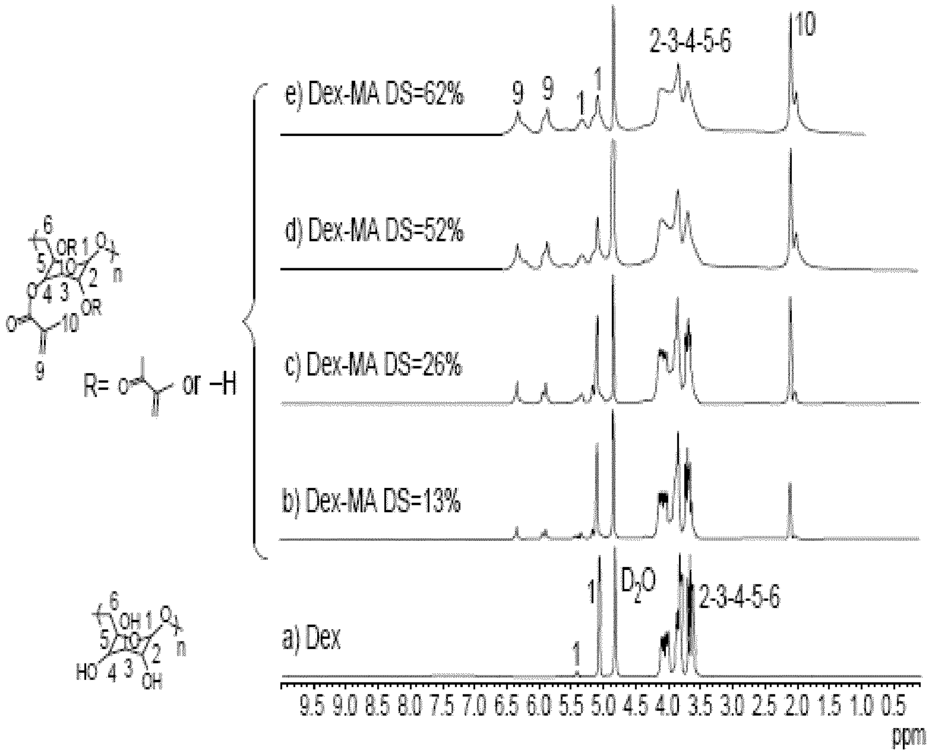
e) Dex-MA DS=62%
d) Dex-MA DS=52%
c) Dex-MA DS=26%
b) Dex-MA DS=13%
a) Dex
D2O
2-3-4-5-6
9.5 9.0 8.5 8.0 7.5 7.0 6.5 6.0 5.5 5.0 4.5 4.0 3.5 3.0 2.5 2.0 1.5 1.0 0.5
ppm

Fig. 1

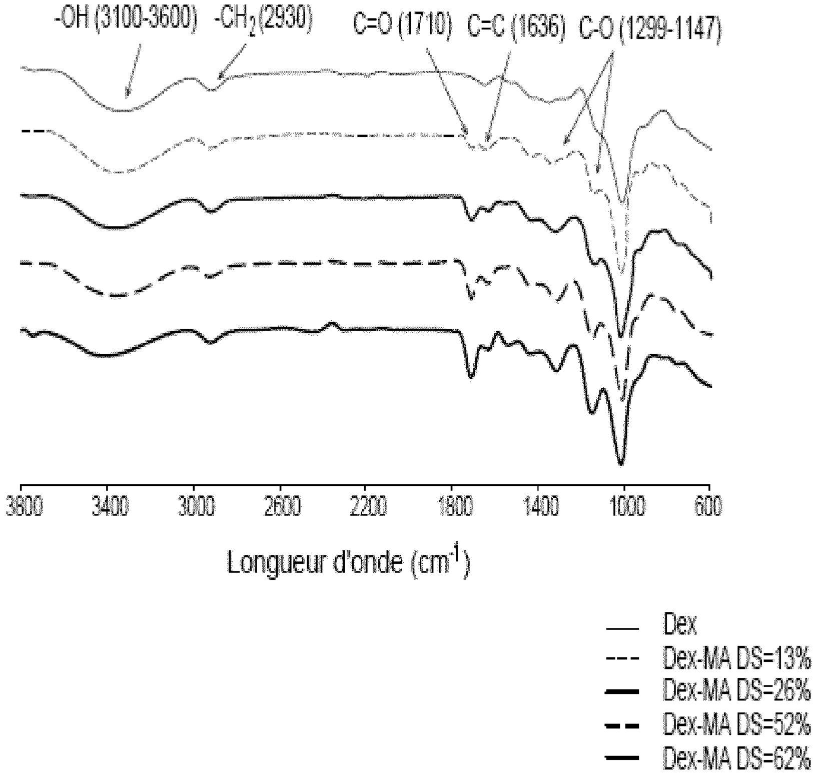
-OH (3100-3600)
-CH2 (2930)
C=O (1710)
C=C (1636)
C-O (1299-1147)
3800 3400 3000 2600 2200 1800 1400 1000 600
Longueur d'onde (cm-1)
Dex
Dex-MA DS=13%
Dex-MA DS=26%
Dex-MA DS=52%
Dex-MA DS=62%

Fig. 2

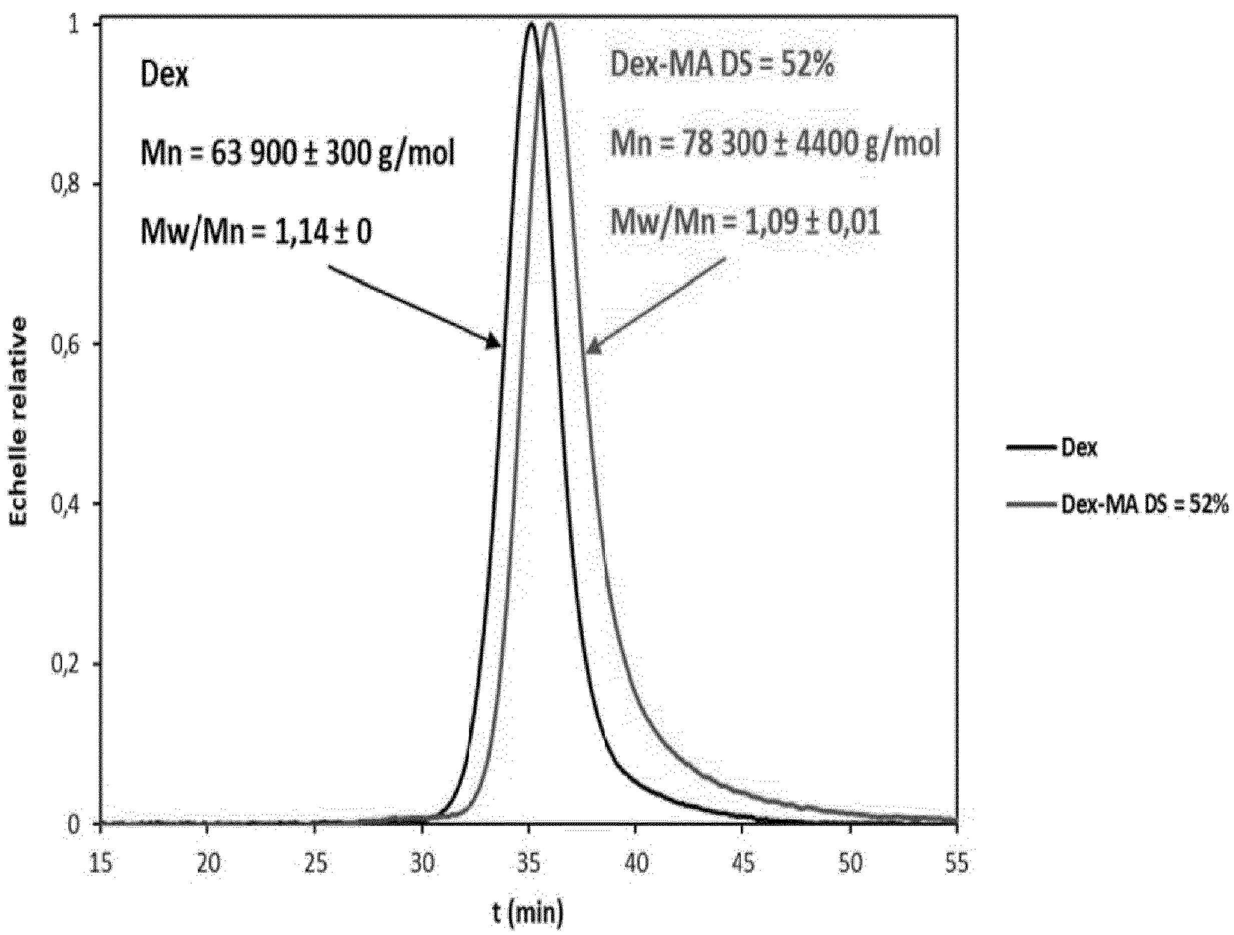
Dex
Mn = 63 900 ± 300 g/mol
Mw/Mn = 1,14 ± 0
Dex-MA DS = 52%
Mn = 78 300 ± 4400 g/mol
Mw/Mn = 1,09 ± 0,01
Echelle relative
1
0,8
0,6
0,4
0,2
0
15
20
25
30
35
40
45
50
55
t (min)
Dex
Dex-MA DS = 52%

Fig. 3

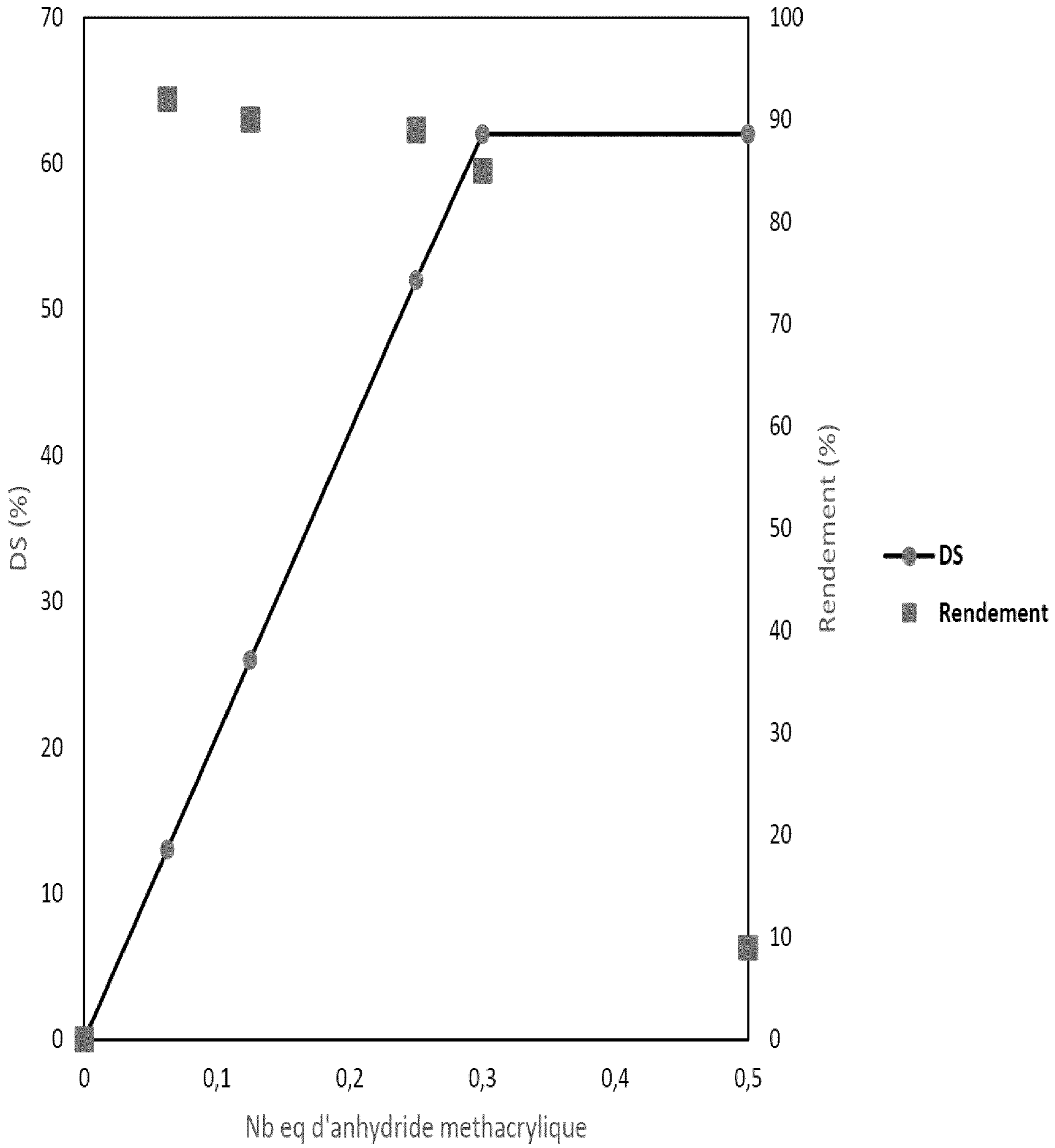
70
60
50
40
30
20
10
0
DS (%)
100
90
80
70
60
50
40
30
20
10
0
Rendement (%)
0
0,1
0,2
0,3
0,4
0,5
Nb eq d'anhydride methacrylique
DS
Rendement

Fig. 4

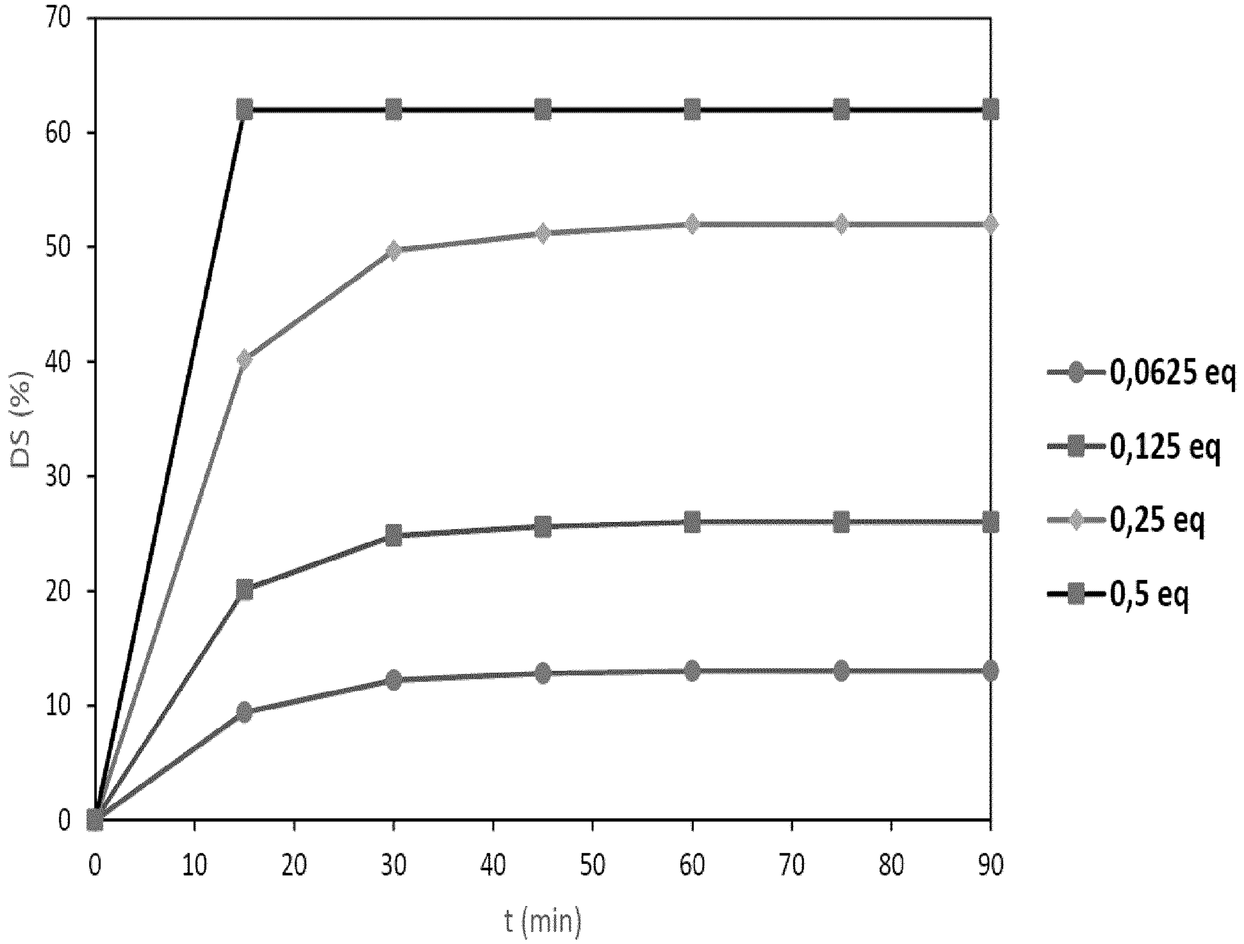
70
60
50
40
30
20
10
0
DS (%)
0
10
20
30
40
50
60
70
80
90
t (min)
0,0625 eq
0,125 eq
0,25 eq
0,5 eq

Fig. 5

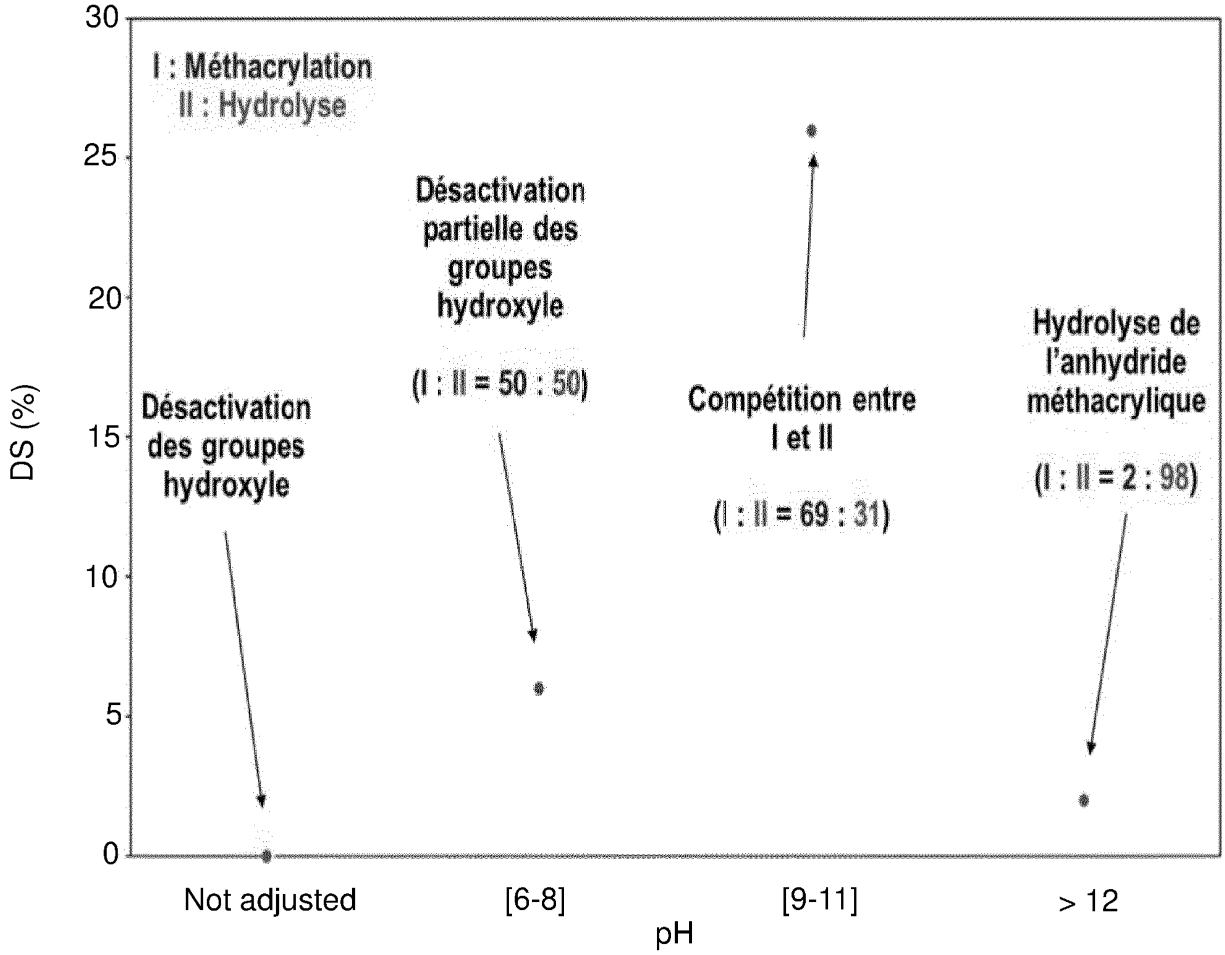
30
25
20
15
10
5
0
DS (%)
I : Méthacrylation
II : Hydrolyse
Désactivation des groupes hydroxyle
Désactivation partielle des groupes hydroxyle
(I : II = 50 : 50)
Compétition entre I et II
(I : II = 69 : 31)
Hydrolyse de l'anhydride méthacrylique
(I : II = 2 : 98)
Not adjusted
[6-8]
[9-11]
> 12
pH

Fig. 6

Europäisches Patentamt
European Patent Office
Office européen des brevets

# RAPPORT DE RECHERCHE EUROPEENNE

Numéro de la demande
EP 22 21 5816

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | KIM SIN-HEE ET AL: "Synthesis and characterization of dextran-methacrylate hydrogels and structural study by SEM", JOURNAL OF BIOMEDICAL MATERIALS RESEARCH, WILEY, NEW YORK, NY, US, vol. 49, no. 4, 12 août 1999 (1999-08-12), pages 517-527, XP002368945, ISSN: 0021-9304, DOI: 10.1002/(SICI)1097-4636(20000315)49:4<517::AID-JBM10>3.0.CO;2-8 * abrégé * * "Synthesis of Dextran-methacrylate" et "Preparation of dextran-methacrylate hydrogel by photocrosslinking"; page 518 * * Schema 1; page 519 * * tableaux I-II * * Conclusion; page 526 * ----- | 1-11 | INV. C08B37/02 C08J3/075 C08L5/02 |
| X | CN 109 593 213 A (UNIV XIAN TECHNOLOGY) 9 avril 2019 (2019-04-09) * exemple 4 * * revendications 1, 5 * ----- | 1-11 | DOMAINES TECHNIQUES RECHERCHES (IPC) C08B C08J C08L |
| A | FR 3 026 299 A1 (OREAL [FR]) 1 avril 2016 (2016-04-01) * page 2, lignes 8-19 * * page 3, lignes 9-15 * * page 4, ligne 27 - page 5, ligne 27 * * Exemples de synthèse 1, 2 et 3 * ----- | 1-11 | |

Le présent rapport a été établi pour toutes les revendications

1

| Lieu de la recherche | Date d'achèvement de la recherche | Examinateur |
|---|---|---|
| Munich | 3 mai 2023 | Lartigue, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 22 21 5816

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-05-2023

| Document brevet cité au rapport de recherche | Date de publication | Membre(s) de la famille de brevet(s) | Date de publication |
|---|---|---|---|
| CN 109593213 A | 09-04-2019 | AUCUN | |
| FR 3026299 A1 | 01-04-2016 | FR 3026299 A1 | 01-04-2016 |
| | | WO 2016050788 A1 | 07-04-2016 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4094832 A


### Littérature non-brevet citée dans la description


- **EDMAN et al.** Immobilization of proteins in microspheres of biodegradable polyacryldextran. *J. Pharm. Sci.,* 1980, vol. 69, 838-842
- **VAN DIJK-WOLTHUIS et al.** Synthesis, characterization, and polymerization of glycidyl méthacrylate derivatized dextran. *Macromolecules,* 1995, vol. 28, 6317-6322
- **VAN DIJK-WOLTHUIS et al.** Reaction of dextran with glycidyl methacrylate: an unexpected transesterification. *Macromolecules,* 1995, vol. 30, 3411-3413
- **KIM et al.** Synthesis and characterization of dextran-methacrylate hydrogels and structural study by SEM. *Journal of Biomedical Materials Research,* 2000, vol. 49, 517-527
- **SMEDS et al.** Synthesis of a novel polysaccharide hydrogel. *J. Macromol. Sci.,* 1999, vol. 36, 981-989
- **KIMBERLY et al.** Photocrosslinkable polysaccharides for in situ hydrogel formation. *Journal of Biomedical Materials Research,* 2001, vol. 54, 115-121
- **QIAN et al.** Delivery of doxorubicin in vitro and in vivo using bio-reductive cellulose nanogels. *Biomater. Sci.,* 2014, vol. 2, 220-232
- **WANG et al.** Synthesis and characterization of chondroitin sulfate-methacrylate hydrogels. *Carbohydrate Polymers,* 2001, vol. 52, 389-396
- **CHEN et al.** Facile methacrylation of cellulose via alkaline aqueous estérification for thiol-ene click functionalization. *Materials Letters,* 2010, vol. 245, 18-21
- **KELLY et al.** Aqueous polymer modification of cellulose nanofibrils by grafting-through a reactive méthacrylate group. *Macromol. Rapid Commun. Macromol. Rapid Commun,* 2021, vol. 42, 2000531
- **KOLAWOLE et al.** Methacrylated chitosan as a polymer with enhanced mucoadhesive properties for transmucosal drug delivery. *International Journal of Pharmaceutics,* 2018, vol. 550, 123-129